# EUROPÄISCHE PATENTSCHRIFT

(11) **EP 3 976 277 B1**
(45) Veröffentlichungstag und Bekanntmachung des Hinweises auf die Patenterteilung: **12.08.2026**
(21) Anmeldenummer: 20725075.4
(22) Anmeldetag: 28.04.2020
(51) Int. Cl.: B05B 15/18

(54) **DRUCKERDÜSE MIT PKD MATERIAL**
PRINTER NOZZLE WITH PKD MATERIAL
BUSE D'IMPRIMANTE AVEC MATÉRIEL PKD

(30) Priorität: 24.05.2019 DE 102019113993
(43) Veröffentlichungstag der Anmeldung: 06.04.2022
(73) Patentinhaber: Gühring KG, 72458 Albstadt (DE)
(72) Erfinder: SAGR, Andreas, 72458 Albstadt (DE); STEVANOVIC, Zarko, 72458 Albstadt (DE); HARTMANN, Peter, 72479 Straßberg (DE); FECHNER, Tobias, 72458 Albstadt (DE)
(74) Vertreter: Winter, Brandl - Partnerschaft mbB
(86) Internationale Anmeldenummer: PCT/DE2020/100346
(87) Internationale Veröffentlichungsnummer: WO 2020/239165

(56) Entgegenhaltungen:
- WO-A1-2005/065836
- CN-A- 107 127 969
- KR-A- 20030 023 948
- US-A- 4 426 954
- US-A1- 2011 045 124
- US-A1- 2017 355 138
- US-A1- 2019 022 934
- US-A1- 2019 091 929
- US-B2- 7 134 868
- US-B2- 7 172 142
- US-B2- 8 512 023
- ANONYMOUS: "Rubies Are A 3D Printer's Best Friend | Hackaday", 30 November 2017 (2017-11-30), pages 1 - 23, XP093275134, Retrieved from the Internet <URL:https://hackaday.com/2017/11/30/rubies-are-a-3d-printers-best-friend/> [retrieved on 20240305]
- ANONYMOUS: "S5-UM3 Hardcore DIAMOND Nozzle - 3D Solex", 30 November 2017 (2017-11-30), pages 1 - 5, XP093275136, Retrieved from the Internet <URL:https://web.archive.org/web/20180927015623/https:/3dsolex.Com/product/3dsolex-everlast-diamond-nozzle> [retrieved on 20240305]

## Beschreibung

Die Erfindung betrifft eine Druckerdüse zur Verarbeitung von 3D-Druckmaterial gemäß dem unabhängigen Anspruch. XP093275136 zeigt eine 3D-Druckerdüse mit einer Düsenspitze aus Diamant.

Die Erfindung befasst sich mit einer Werkzeugneuentwicklung im Bereich 3D-Druckerdüsen. 3D-Druckerdüsen sind das wichtigste Bauteil bei einem 3D-Drucker, weil durch diese das Filament positioniert wird und damit die Druckgeschwindigkeit und die Druckqualität maßgeblich bestimmt werden.

Durch die Druckerdüse bzw. Düse (Nozzle) tritt beim Schmelzschichtverfahren (Fused Deposition Modeling (FDM) bzw. Fused Filament Fabrication (FFF) das zu druckende 3D-Druckmaterial in schmelzflüssiger Form aus. Die Druckerdüse bestimmt mit dem Durchmesser die maximale Breite pro Linie beim Drucken sowie den Durchmesser des verwendeten Filaments Druckerdüsen aus Messing sind aufgrund der guten Wärmeleitfähigkeit und geringen Kosten weit verbreitet.

Ein Nachteil bei 3D-Druckerdüsen aus Messing ist, dass die Düsen bei Gebrauch von Filamenten wie PEEK (Polyetheretherketon) Kunststoffen, die für den Hochtemperaturbereich sind, oder bei Einsatz von abrasiven Zusatzstoffen, wie z. B. Kohlefaser oder Borcarbid, schnell abnutzen. Durch die erzeugte stetige Reibung wird insbesondere die Düsenöffnung ausgeschliffen und die ausgeschliffene Düsenöffnung führt zu einer Verschlechterung der Qualität der Druckergebnisse.

Je nach eingesetztem Filament kann es erforderlich sein, eine Druckerdüse aus einem anderen Material einzusetzen. Es ist es bekannt Stahldüsen aus gehärtetem Stahl einzusetzen. Derartige Druckerdüsen aus Stahl können auch mit Edelsteineinsatz, zum Beispiel aus Rubin, versehen sein, um die Beständigkeit zu erhöhen und dauerhaft die Druckergebnisse zu verbessern.

Solche Druckerdüsen haben neben dem höheren Preis auch den Nachteil, dass die Temperaturleitfähigkeit im Vergleich zu Messing schlechter ist. Bei solchen Düsen mit Edelsteineinsatz ist ferner die Bruchgefahr erhöht.

Der Erfindung liegt die Aufgabe zugrunde, eine F D M -3 D - Druckerdüse zum 3D-Drucken mit 3D-Druckmaterial-Filamenten bereitzustellen, die die Nachteile im Stand der Technik überwindet und die insbesondere bei abrasiven Filamentmaterialien eine hohe Lebensdauer und gute Druckqualität gewährleistet sowie eine einfache Verbindung zwischen einem Düsenkörper und einem Düseneinsatz ermöglicht.

Die Aufgabe wird durch eine FDM-3D-Druckerdüse zum 3D-Drucken mit 3D-Druckmaterial-Filamenten gemäß dem unabhängigen Anspruch gelost. Vorteilhafte Ausgestaltungen bilden den Gegenstand der unabhängigen Ansprüche.

Die Erfindung umfasst eine F D M - 3 D - Druckerdüse zum 3D-Drucken mit 3D-Druckmaterial-Filamenten, wobei die FDM-3D-Druckerdüse einen Düsenkörper und einen Düseneinsatz umfasst, wobei der Düsenkörper in einem hinteren Teil eine gewindeförmige Aufnahme zum Eischrauben in eine 3D-Druckervorrichtung und in einem vorderen Teil einen Austrittsabschnitt umfasst, der an der Vorderspitze den Düseneinsatz mit von allen Seiten gelaserter Außenkontur umfasst. Der Düsenkörper ist aus einem Vollhartmetall, Metall oder Messing. Der Austrittsabschnitt umfasst endseitig eine nach vorne hin offene Ausnehmung mit sechseckiger Randform, wobei die FDM-3D-Druckerdüse einen im Düseneinsatz fortgesetzten Kanal zum Transport des 3D-Druckmaterial-Filaments hat, wobei der Kanal durch den Düsenkörper läuft, die Ausnehmung eine Tiefe und einen lateralen Durchmesser hat, der komplementär ausgebildete Düseneinsatz von der Vorderspitze des Austrittsabschnitts her zur gewindeförmigen Aufnahme hin fast vollständig in die Ausnehmung einsetzbar ist, und ein Verbindungsstück aus Vollhartmetall, an dem der Düseneinsatz angeordnet ist, am Grund der Ausnehmung, in die der Kanal mündet, zur gewindeförmigen Aufnahme hin anliegt, wobei sich im Verbindungsstück die Fortsetzung des Kanals durchgehend zum Düseneinsatz hin verjüngt. Der Düseneinsatz ist vollständig aus einem PKD (Polykristalliner Diamant) Material.

Das PKD-Material hat bei abrasiven Filamentmaterialien eine hohe Lebensdauer bei geringer Bruchfestigkeit. Ferner hat das PKD-Material eine hohe Wärmeleitfähigkeit. Die derart ausgestaltete Ausnehmung im Austrittsabschnitt erlaubt ein einfaches Verlöten von Düsenkörper und Düseneinsatz.

Gemäß einem bevorzugten Aspekt ist der Düsenkörper und der Düseneinsatz separat ausgebildet. Die separate Ausgestaltung von Düsenkörper und Düseneinsatz erlaubt die Verwendung von unterschiedlichen Materialien zur Herstellung des Düsenkörpers und des Düseneinsatzes.

Besonders vorteilhaft ist der Düsenkörper und der Düseneinsatz stoffschlüssig miteinander verbunden. Die stoffschlüssige Verbindung kann durch Loten hergestellt werden, indem der Düsenkörper und der Düseneinsatz aneinandergehalten werden und auf die Verbindungsstelle ein Lot aufgebracht wird.

Gemäß einem besonders vorteilhaften Aspekt schmilzt das zur Verbindung von Düsenkörper und der Düseneinsatz eingesetzte Lotmaterial ab einer Temperatur von 500° und mehr. So kann eine temperaturbeständige Druckerdüse bereitgestellt werden, die zum Beispiel bei der Verarbeitung von PEEK-Kunststoffen einsetzbar ist.

Die gelaserte Außenkontur **des Düseneinsatzes** hat bevorzugt mehrere konisch zulaufende Teilflachen.

Besonders bevorzugt hat der Düseneinsatz eine Austrittsöffnung mit 2, 3, 4, 5 oder 8 mm.

Ein anderer vorteilhafter Aspekt sieht vor, dass der Austrittsabschnitt unter einem Winkel im Bereich von 50° bis 70 °, insbesondere 60° spitz zulaufend ausgebildet ist. Diese Kontur bewirkt eine ausreichende Bewegungsfreiheit der Druckerdüse beim Aufbringen des Druckmaterials.

Vorteilhafterweise hat der Düseneinsatz eine Stirnflache mit einem Durchmesser von 1,5 mm. Die Stirnflache ist groß genug, um ausreichend Wärme an die Spitze der Druckerdüse zu transportieren und so klein, dass feine Strukturen damit druckbar sind.

Bevorzugt ist der Düseneinsatz zumindest abschnittsweise poliert.

Die Erfindung wird im Folgenden anhand des in den Zeichnungen dargestellten Beispiels zusätzlich erläutert.

Es zeigen:
- Fig. 1: eine perspektivische Darstellung einer Druckerdüse zur Verarbeitung von 3D-Druckmaterial gemäß einem Ausführungsbeispiel der Erfindung;
- Fig. 2: eine Schnittansicht einer Variante der Druckerdüse aus Fig. 1;
- Fig. 3: eine Schnittansicht einer nicht zur Erfindung gehörenden Variante der Druckerdüse aus Fig. 1; und
- Fig. 4: eine Vorderansicht der Druckerdüse aus Fig. 1.

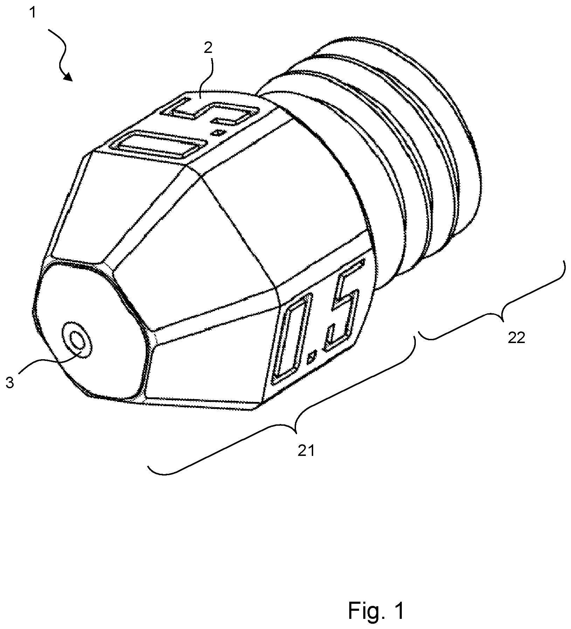

In **Fig. 1** ist eine perspektivische Ansicht einer Druckerdüse 1 gezeigt, die zur Verarbeitung von 3D-Druckmaterial an einer Druckereinrichtung (nicht dargestellt) anbringbar ist.

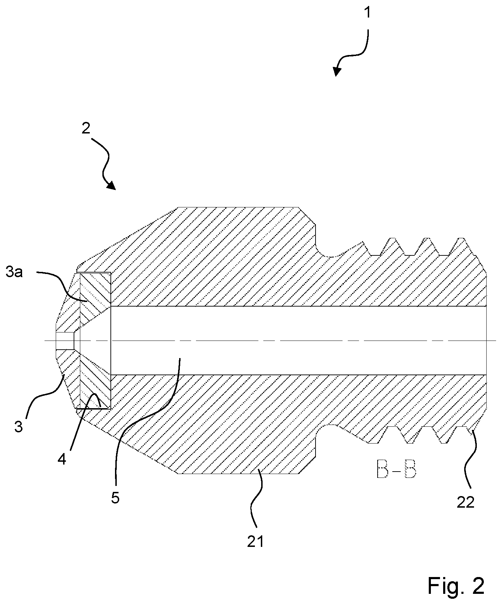

Die gezeigte Druckerdüse 1 dient zur Verarbeitung von 3D-Druckmaterial in der Form eines Filaments. Die Druckerdüse 1 hat einen Düsenkörper 2, der im hinteren Teil eine gewindeförmige Aufnahme 22 zum Einschrauben in den 3D-Drucker hat. Im vorderen Teil hat der Düsenkörper 2 einen Austrittsabschnitt 21, der einteilig mit der Aufnahme 22 ausgebildet ist. Der Austrittsabschnitt 21 umfasst an der Vorderspitze einen Düseneinsatz 3, der wie weiter unten beschrieben und in Fig. 2 dargestellt, einen im Austrittskanal und Aufnahme verlaufenden inneren Kanal fortsetzt.

Der Düsenkörper2 und der Düseneinsatz 3 sind separat ausgebildet. Der Düsenkörper ist aus einem Vollhartmetall, Metall oder Messing. Der Düseneinsatz 3 umfasst grundsätzlich ein PKD-Material, wobei der gezeigte Düseneinsatz 3 vollständig aus einem PKD-Material ist. Das PKD Material hat bei abrasiven Filamentmaterialien eine hohe Lebensdauer bei geringer Bruchfestigkeit. Ferner hat das PKD Material eine hohe Wärmeleitfähigkeit.

Der Düsenkörper 2 und der Düseneinsatz 3 sind stoffschlüssig in der Art einer Lotstelle miteinander verbunden. Zum Einsatz bei hohen Temperaturen, ist das zur Verbindung von Düsenkörper und Düseneinsatz eingesetzte Lotmaterial derart gewählt, dass es ab einer Temperatur von 500° und mehr schmilzt. Ein Beispiel ist Silberlot.

Die Öffnung in der Mitte des Düseneinsatzes 3 hat einen Durchmesser von 5 mm, wobei das gezeigte Beispiel nicht auf dieses Maß beschränkt ist. Der Düseneinsatz 3 hat eine Stirnflache mit einem Durchmesser von 1,5 mm.

Der Austrittsabschnitt 21 hat im Bereich zwischen Düseneinsatz 3 und Aufnahme 21 mehrere Flächenabschnitte, die unter einem Winkel von etwa 60° spitz zulaufend ausgebildet sind.

Der Düseneinsatz 3 ist an der Oberflache, an der Innenseite und an der Außenseite poliert.

**Fig.** 2 ist eine Schnittansicht einer Variante der Druckerdüse 1 aus Fig. 1. Im gezeigten Querschnitt hat die Druckerdüse 1 einen durchlaufenden Kanal 5, in dem während der Verarbeitung von 3D-Druckmaterial das Filament transportiert wird.

Im rechten Teil der Darstellung hat die Druckerdüse 1 eine gewindeförmige Aufnahme 22 zum Einschrauben in den 3D-Drucker.

Im linken Teil der Darstellung hat der Düsenkörper 2 einen Austrittsabschnitt 21 der einteilig mit der Aufnahme 22 aus Vollhartmetall, Metall oder Messing ausgebildet ist.

Der Austrittsabschnitt 21 umfasst an der Vorderspitze einen Düseneinsatz 3, der den Kanal 5 zum Transport des Filaments fortsetzt. Der Düseneinsatz 3 ist in dieser Variante an einem Verbindungsstück 3a aus Vollhartmetall angeordnet.

Bei dem dargestellten Austrittsabschnitt 21 ist endseitig eine Ausnehmung 4 ausgebildet, die eine sechseckige Randform hat. Die Ausnehmung 4 hat eine Tiefe und einen lateralen Durchmesser, dass der komplementär ausgebildete Düseneinsatz 3 mit seinem Verbindungsstück 3a fast vollständig darin aufgenommen wird. Der derart komplementär ausgebildete Düseneinsatz 3 hat von allen Seiten eine gelaserte Außenkontur.

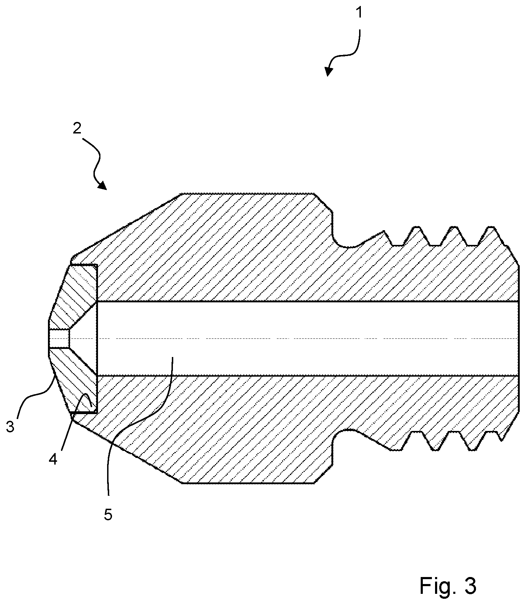

**Fig.** 3 eine Schnittansicht einer nicht zur Erfindung gehörenden Variante der Druckerdüse aus Fig. 1, wobei der Düsenseinsatz 3 ohne Verbindungsstuck (siehe Fig. 3a) ausgebildet ist.

Der Austrittsabschnitt 21 umfasst an der Vorderspitze einen Düseneinsatz 3, der den Kanal 5 zum Transport des Filaments fortsetzt. Im gezeigten Beispiel ist der Düseneinsatz vollständig aus PKD.

Bei dem dargestellten Austrittsabschnitt 21 ist endseitig eine Ausnehmung 4 ausgebildet, die eine sechseckige Randform hat. Die Ausnehmung 4 hat eine Tiefe und einen lateralen Durchmesser, dass der komplementär ausgebildete Düseneinsatz 3 fast vollständig darin aufgenommen wird. Der derart komplementär ausgebildete Düseneinsatz 3 hat von allen Seiten eine gelaserte Außenkontur.

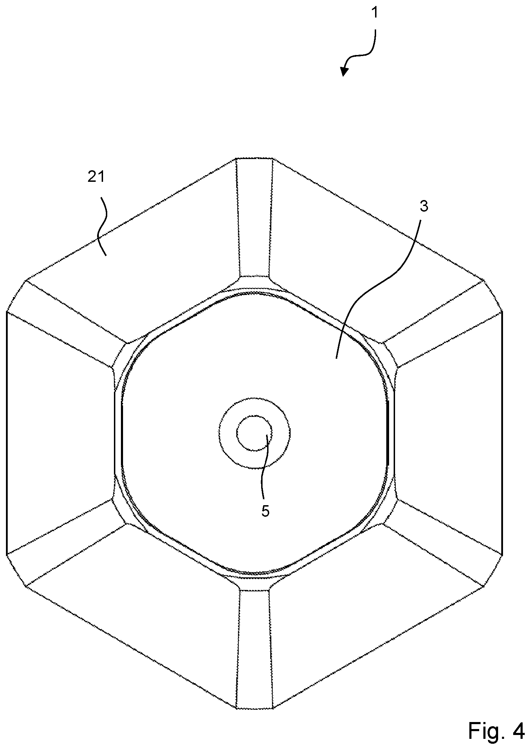

**Fig.** 4 ist eine Vorderansicht der Druckerdüse 1 aus Figuren 1 und 2. Der Austrittsabschnitt 21 trägt in einer Ausnehmung den Düseneinsatz 3. Der Kanal 5 dient zum Transport des Filaments.

## Patentansprüche

1. FDM-3D-Druckerdüse (1) zum 3D-Drucken mit 3D-Druckmaterial-Filamenten, wobei die FDM-3D-Druckerdüse (1) einen Düsenkörper (2) und einen Düseneinsatz (3) umfasst, wobei der Düsenkörper (2) in einem hinteren Teil eine gewindeförmige Aufnahme (22) zum Einschrauben in eine 3D-Druckervorrichtung und in einem vorderen Teil einen Austrittsabschnitt (21) umfasst, der an der Vorderspitze den Düseneinsatz (3) mit von allen Seiten gelaserter Außenkontur umfasst, der Düsenkörper (2) aus einem Vollhartmetall, Metall oder Messing ist, wobei der Austrittsabschnitt (21) endseitig eine nach vorne hin offene Ausnehmung (4) mit sechseckiger Randform umfasst, wobei die FDM-3D-Druckerdüse (1) einen im Düseneinsatz (3) fortgesetzten Kanal (5) zum Transport des 3D-Druckmaterial-Filaments hat, **dadurch gekennzeichnet, dass** der Kanal (5) durch den Düsenkörper (2) läuft, die Ausnehmung (4) eine Tiefe und einen lateralen Durchmesser hat, und der komplementär ausgebildete Düseneinsatz (3) von der Vorderspitze des Austrittsabschnitts (21) her zur gewindeförmigen Aufnahme (22) hin fast vollständig in die Ausnehmung (4) einsetzbar ist, ein Verbindungsstück (3a) aus Vollhartmetall, an dem der Düseneinsatz (3) angeordnet ist, am Grund der Ausnehmung (4), in die der Kanal (5) mündet, zur gewindeförmigen Aufnahme (22) hin anliegt, wobei sich im Verbindungsstück (3a) die Fortsetzung des Kanals (5) durchgehend zum Düseneinsatz (3) hin verjüngt, und der Düseneinsatz (3) vollständig aus einem PKD (Polykristalliner Diamant) Material ist.

2. FDM-3D-Druckerdüse (1) nach Anspruch 1, wobei der Düsenkörper (2) und der Düseneinsatz (3) separat ausgebildet sind.

3. FDM-3D-Druckerdüse (1) nach Anspruch 2, wobei der Düsenkörper (2) und der Düseneinsatz (3) stoffschlüssig miteinander verbunden sind.

4. FDM-3D-Druckerdüse (1) nach Anspruch 3, wobei ein zur Verbindung von Düsenkörper (2) und Düseneinsatz (3) eingesetztes Lotmaterial ab einer Temperatur von 500° und mehr schmilzt.

5. FDM-3D-Druckerdüse (1) nach einem der vorangehenden Ansprüche, wobei der Düseneinsatz (3) von allen Seiten eine gelaserte Außenkontur hat.

6. FDM-3D-Druckerdüse (1) nach einem der vorangehenden Ansprüche, wobei der Düseneinsatz (3) eine Austrittsöffnung mit 2, 3, 4, 5 oder 8 mm hat.

7. FDM-3D-Druckerdüse (1) nach einem der vorangehenden Ansprüche, wobei der Düseneinsatz (3) eine Stirnfläche mit einem Durchmesser von 1,5 mm umfasst.

8. FDM-3D-Druckerdüse (1) nach einem der vorangehenden Ansprüche, wobei der Austrittsabschnitt (21) unter einem Winkel im Bereich von 50° bis 70 °, insbesondere 60° spitz zulaufend ausgebildet ist.

9. FDM-3D-Druckerdüse (1) nach einem der vorangehenden Ansprüche, wobei der Düseneinsatz (3) zumindest abschnittsweise poliert ist.

## Claims

1. FDM-3D-extrusion nozzle (1) for 3D-printing with 3D printing material filaments, wherein the FDM-3D-extrusion nozzle (1) comprises a nozzle body (2) and a nozzle insert (3), wherein in a rear portion the nozzle body (2) comprises a threaded seat (22) for screwing into a 3D printing device and in a front portion an outlet portion (21), which at the front tip comprises the nozzle insert (3) having a lasered outer contour from all sides, wherein the nozzle body (2) is made of a solid carbide, metal, or brass, wherein the outlet portion (21) comprises, on the end side, a recess (4) open toward the front and having a hexagonal peripheral shape, wherein the FDM-3D-extrusion nozzle (1) has a channel (5), continued in the nozzle insert (3), for transporting the 3D printing material filament, **characterized in that** the channel (5) runs through the nozzle body (2), the recess (4) has a depth and a lateral diameter, and the complementarily formed nozzle insert (3) is insertable almost completely into the recess (4) from the front tip of the outlet portion (21) toward the threaded seat (22), a connecting piece (3a) of solid carbide, on which the nozzle insert (3) is arranged, bears against the bottom of the recess (4), into which the channel (5) opens, toward the threaded seat (22), wherein in the connecting piece (3a) the continuation of the channel (5) tapers continuously toward the nozzle insert (3), and the nozzle insert (3) is made completely of a PCD (polycrystalline diamond) material.

2. FDM-3D-extrusion nozzle (1) according to claim 1, wherein the nozzle body (2) and the nozzle insert (3) are formed separately.

3. FDM-3D-extrusion nozzle (1) according to claim 2, wherein the nozzle body (2) and the nozzle insert (3) are connected to one another by means of a substance-to-substance bond.

4. FDM-3D-extrusion nozzle (1) according to claim 3, wherein a solder material used for the connection of nozzle body (2) and nozzle insert (3) melts starting at a temperature of 500° and more.

5. FDM-3D-extrusion nozzle (1) according to any one of the preceding claims, wherein the nozzle insert (3) has a lasered outer contour from all sides.

6. FDM-3D-extrusion nozzle (1) according to any one of the preceding claims, wherein the nozzle insert (3) has an outlet opening with 2, 3, 4, 5, or 8 mm.

7. FDM-3D-extrusion nozzle (1) according to any one of the preceding claims, wherein the nozzle insert (3) comprises a front surface with a diameter of 1.5 mm.

8. FDM-3D-extrusion nozzle (1) according to any one of the preceding claims, wherein the outlet portion (21) is formed to taper at an angle in the range of from 50° to 70°, in particular 60°.

9. FDM-3D-extrusion nozzle (1) according to any one of the preceding claims, wherein the nozzle insert (3) is polished at least in some sections.

## Revendications

1. Buse d'imprimante 3D FDM (1) destinée à l'impression 3D avec des filaments de matériau d'impression 3D, dans laquelle la buse d'imprimante 3D FDM (1) comprend un corps de buse (2) et un insert de buse (3), dans laquelle le corps de buse (2) comprend, dans une partie arrière, un logement fileté (22) destiné à être vissé dans un dispositif d'imprimante 3D et, dans une partie avant, une section de sortie (21) qui comprend, à son extrémité avant, l'insert de buse (3) avec contour extérieur usiné au laser de tous les côtés, le corps de buse (2) est constitué de carbure monobloc, de métal ou de laiton, dans laquelle la section de sortie (21) comprend côté extrémité un évidement (4) ouvert vers l'avant avec bord de forme hexagonale, dans laquelle la buse d'imprimante 3D FDM (1) présente un canal (5) se prolongeant dans l'insert de buse (3) pour le transport du filament de matériau d'impression 3D, **caractérisée en ce que** le canal (5) traverse le corps de buse (2), l'évidement (4) présente une profondeur et un diamètre latéral, et l'insert de buse (3) conçu de manière complémentaire peut être inséré presque entièrement dans l'évidement (4) à partir de la pointe avant de la section de sortie (21) jusqu'au logement fileté (22), une pièce de liaison (3a) en carbure monobloc, sur laquelle l'insert de buse (3) est disposé, repose au fond de l'évidement (4) dans lequel le canal (5) débouche, contre le logement fileté (22), dans laquelle le prolongement du canal (5) dans la pièce de liaison (3a) se rétrécit de manière continue vers l'insert de buse (3), et l'insert de buse (3) est entièrement constitué d'un matériau PKD (diamant polycristallin).

2. Buse d'imprimante 3D FDM (1) selon la revendication 1, dans laquelle le corps de buse (2) et l'insert de buse (3) sont conçus séparément.

3. Buse d'imprimante 3D FDM (1) selon la revendication 2, dans laquelle le corps de buse (2) et l'insert de buse (3) sont connectés entre eux par accouplement de matière.

4. Buse d'imprimante 3D FDM (1) selon la revendication 3, dans laquelle un matériau de soudure utilisé pour relier le corps de buse (2) et l'insert de buse (3) fond à partir d'une température de 500° et plus.

5. Buse d'imprimante 3D FDM (1) selon l'une quelconque des revendications précédentes, dans laquelle l'insert de buse (3) présente un contour extérieur usiné au laser de tous les côtés.

6. Buse d'imprimante 3D FDM (1) selon l'une quelconque des revendications précédentes, dans laquelle l'insert de buse (3) présente une ouverture de sortie de 2, 3, 4, 5 ou 8 mm.

7. Buse d'imprimante 3D FDM (1) selon l'une quelconque des revendications précédentes, dans laquelle l'insert de buse (3) comprend une surface avant d'un diamètre de 1,5 mm.

8. Buse d'imprimante 3D FDM (1) selon l'une quelconque des revendications précédentes, dans laquelle la section de sortie (21) est conçue de manière à s'effiler selon un angle dans la plage comprise entre 50° et 70°, en particulier 60°.

9. Buse d'imprimante 3D FDM (1) selon l'une quelconque des revendications précédentes, dans laquelle l'insert de buse (3) est poli au moins par sections.
